# EUROPÄISCHE PATENTSCHRIFT

(11) **EP 1 196 496 B1**
(45) Veröffentlichungstag und Bekanntmachung des Hinweises auf die Patenterteilung: **15.11.2006**
(21) Anmeldenummer: 00945800.1
(22) Anmeldetag: 21.06.2000
(51) Int. Cl.: C08L 23/04, C08F 232/00

(54) **VERFAHREN ZUR HERSTELLUNG AMORPHER POLYOLEFINE MIT BREITER MOLMASSENVERTEILUNG**
METHOD OF PRODUCING AMORPHOUS POLYOLEFINS WITH A WIDE MOLE WEIGHT DISTRIBUTION
PROCEDE POUR PRODUIRE DES POLYOLEFINES AMORPHES PRESENTANT UNE LARGE DISTRIBUTION DES MASSES MOLAIRES

(30) Priorität: 30.06.1999 DE 19929809
(43) Veröffentlichungstag der Anmeldung: 17.04.2002
(73) Patentinhaber: Topas Advanced Polymers GmbH, 65926 Frankfurt am Main (DE)
(72) Erfinder: OSAN, Frank, D-46499 Hamminkeln (DE); BERGER, Klaus, D-65843 Sulzbach (DE); RUCHATZ, Dieter, D-42579 Heiligenhaus (DE); STARK, Oliver, D-63110 Rodgau (DE); NAKAMURA, Toru, Abiko-shi Chiba 270-1164 (JP)
(74) Vertreter: Ackermann, Joachim
(86) Internationale Anmeldenummer: PCT/EP2000/005759
(87) Internationale Veröffentlichungsnummer: WO 2001/002481

(56) Entgegenhaltungen:
- EP-A- 0 849 074
- DE-A- 19 633 641
- US-A- 5 498 677
- US-A- 5 658 992
- US-A- 5 869 586

## Beschreibung

Die Erfindung betrifft ein kontinuierliches Verfahren zur Herstellung von Gemischen amorpher Polyolefine mit breiter Molmassenverteilung und einheitlicher Glastemperatur.

Zur Herstellung eines bimodalen oder multimodalen Gemisches amorpher Polyolefine müssen zwei oder mehrere Polyolefine mit unterschiedlichen Molmassen gemischt und homogenisiert werden. Bei einem geringen Unterschied der Molmassen der Ausgangskomponenten und infolgedessen geringem Unterschied der Schmelzeviskositäten kann der Mischvorgang in der Schmelze erfolgen. Dies geschieht bei der Extrusion. Ab einer gewissen Differenz der Schmelzviskositäten kann eine homogene Vermischung amorpher Polyolefine in der Schmelze jedoch nicht mehr erfolgen. Nach Karam, Bellinger, Ind. A. Chem. Eng. Fund 7(1968) 4, 571-581 ist diese Grenze erreicht, wenn das Viskositätsverhältnis von Neben- und Hauptbestandteil der Mischung kleiner als 0,005 und größer als 4 ist. Dem effektivem Einmischen eines höhermolekularen Polymeren in eine niedermolekulare Matrix über die Schmelze sind demnach enge Grenzen gesetzt. Das Schmelzemischen kann nur durch eine Reihenschaltung von Schmelzemischern erfolgen. Ein solches Verfahren bedingt allerdings hohe Investitions- und Prozeßkosten, ist also nur wenig wirtschaftlich.

Aus EP-A-0 843 223 ist ein bimodaler Toner bekannt. Die Herstellung des Gemisches erfolgt diskontinuierlich. Der höhermolekulare Anteil weist eine Molekulargewichtsverteilung (M_{w}) von 70.000 g/mol, eine Viskositätszahl (VZ) von 80 ml/g und eine Glastemperatur größer 70 °C auf. Die Herstellung des Toners erfolgt durch Mischen der Ausgangskomponenten in der Schmelze. Bei größeren Unterschieden in der Molmasse der Blendkomponenten unterscheiden sich die Schmelzeviskositäten so stark, daß die Herstellung eines homogenen Blends über die Schmelze nur noch sehr schwierig möglich ist.

Aus WO 98/29783 ist ein Toner mit breiter Molmassenverteilung (bi-, multimodal, breite Verteilung ohne separierte Peaks) bekannt. Die Herstellung des Basismaterials sowie die Mischung erfolgten diskontinuierlich. Der höhermolekulare Anteil hatte eine M_{w} von 100.000g/mol und eine VZ von 130ml/g, demnach etwas höher als in EP-A-0 843 223. Bei noch größeren Unterschieden in der Molmasse der Blendkomponenten unterscheiden sich die Schmelzeviskositäten so stark, daß die Herstellung eines homogenen Blends über die Schmelze nur noch äußerst schwierig möglich ist.

Aus EP-A-0 128 045 ist ein Verfahren zur Herstellung von kristallinen Polyolefinen bekannt. Das Katalysatorsystem zur Polymerisation von Ethylen zu Polyethylen besteht aus zwei verschiedenen Metallocenen. Der Prozeß der homogenen Katalyse und das dabei entstehende Polyethylen mit einer Polydispersität zwischen 2 und 50 wird ebenfalls beschrieben. Entsprechende Katalysatorsysteme zur Herstellung amorpher Cycloolefincopolymere sind dagegen nur äußerst schwierig zu finden: Einerseits müssen sie die Reaktion hochspezifisch katalysieren, ohne daß lichtstreuende Nebenprodukte gebildet werden, welche die Transparenz des Werkstoffes einschränken. Andererseits sollten diese Katalysatoren das gleiche Copolymerisationsdiagramm zeigen, damit unter identischen Reaktionsbedingungen ein Kunststoff mit nur einer makroskopisch beobachtbaren Glasübergangstemperatur gebildet wird.

Aus WO 96/18662 ist ein Verfahren zur Herstellung von Polyethylen bekannt, wobei die erste Stufe in einem Schlaufenreaktor in einem niedrig siedendem Kohlenwassertoff, die zweite Stufe ebenfalls in einem Schlaufenreaktor in einem Lösungsmittel und die dritte Stufe in der Gasphase ausgeführt wird. In jeder Stufe kann noch Katalysator, Cokatalysator, Ethylen oder Wasserstoff zugegeben werden. In der ersten Stufe wird der höhermolekulare Anteil hergestellt. Im Gasphasenreaktor kann auch ein C₄-C₈-α- Olefin als Comonomer zugegeben werden. Dieses Verfahren ist nicht auf die Herstellung von Cycloolefincopolymeren übertragbar, da Gasphasenreaktoren für flüssige Comonomere ungeeignet sind. Darüber hinaus sollten die Katalysatoren die Reaktion hochspezifisch katalysieren, ohne daß sich lichtstreuende Nebenprodukte bilden.

Die Aufgabe der vorliegenden Erfindung besteht darin, ein wirtschaftliches und umweltfreundliches kontinuierliches Verfahren zur Herstellung eines bimodalen oder multimodalen Gemisches eines oder mehrerer amorpher Polyolefine bereitzustellen.

Die Lösung der Aufgabe erfolgt durch ein Verfahren zur Herstellung eines bimodalen oder multimodalen Gemisches amorpher Polyolefine unabhängig von der Differenz in der mittleren Molmasse und in der Molmassenverteilung der amorphen Polyolefine, wobei mindestens ein amorphes Polyolefin mit hoher Molekularmasse, das eine VZ > 100 ml/g und eine M_{w} von > 100000 g/mol aufweist, mit mindestens einem amorphen Polyolefin mit niedriger Molekularmasse in Lösung gemäß dem beanspruchten Verfahren in Kontakt gebracht und gemischt wird und das Lösungsmittel anschließend entfernt wird.

Erfindungsgemäß ist ein Verfahren bevorzugt, wobei das amorphe Polyolefin mit hoher Molekularmasse bevorzugt eine VZ > 120 ml/g eine M_{w} von > 120000 g/mol, besonders bevorzugt ein VZ > 150 ml/g eine M_{w} von > 150000 g/mol aufweist. Solche Polyolefine sind in der Schmelze nur noch äußerst schwierig verarbeitbar.

Erfindungsgemäß ist ein Verfahren besonders bevorzugt, wobei das amorphe Polyolefin mit hoher Molekularmasse ein Cycloolefincopolymer ist Cycloolefiincopolymere sind mittels Metallocenkatalysatoren oder anderen Übergangsmetallverbindungen technisch gut herstellbar.

Das bimodale oder multimodale Gemisch enthält mindestens ein Cycloolefincopolymer, enthaltend 0,1 bis 100 Gew.-%, bevorzugt 0,1 bis 99,9 Gew.-%, besonders bevorzugt 10 bis 90 Gew.-% und ganz besonders bevorzugt 30 bis 70 Gew.-%, bezogen auf die Gesamtmasse des Cycloolefincopolymers, polymerisierte Einheiten, welche sich ableiten von mindestens einem polycyclischen Olefin der Formeln I, II, II', III, IV, V oder VI 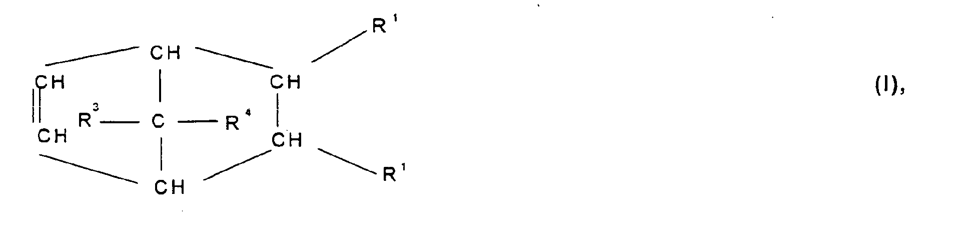 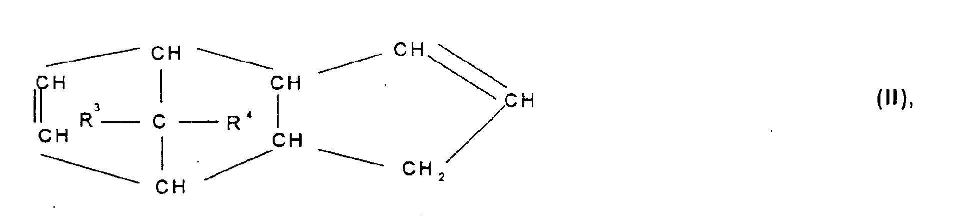 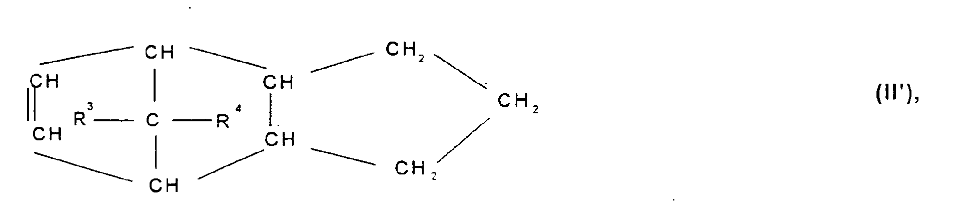 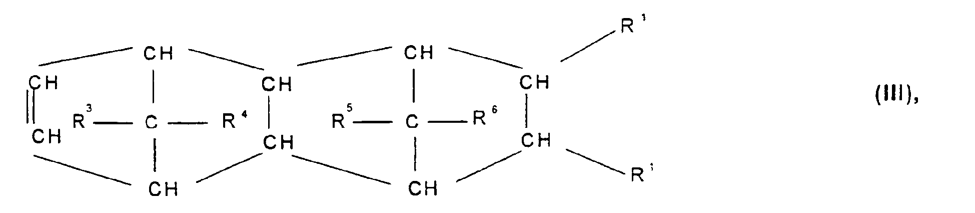 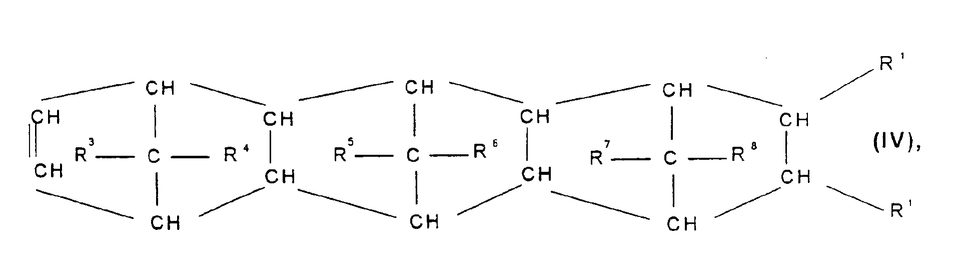 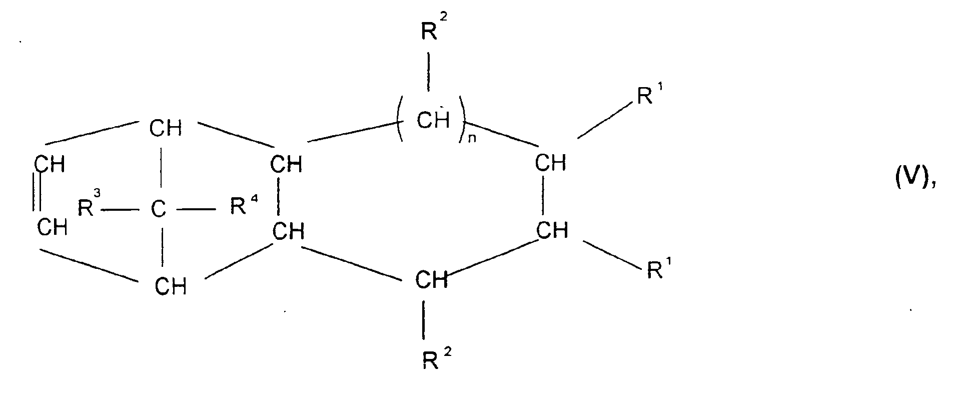 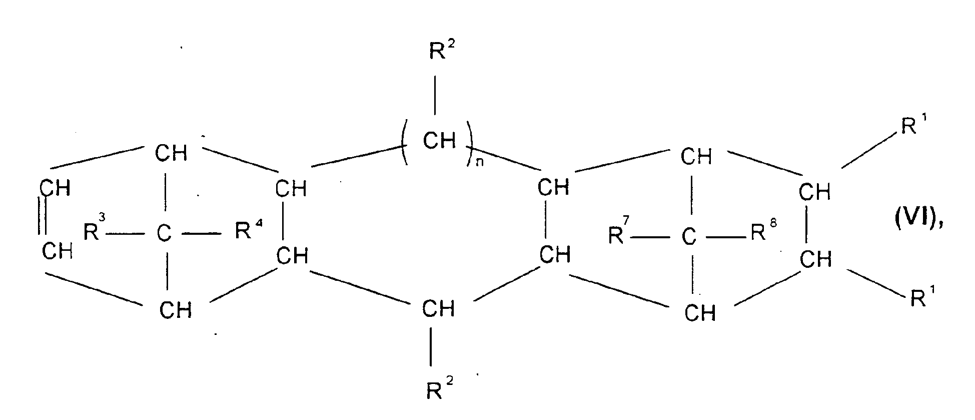 worin R¹; R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln 1 bis VI eine unterschiedliche Bedeutung haben können, worin n Werte von 0 bis 5 annehmen kann, und enthaltend gegebenfalls bis zu 99,9 Gew.-%, bevorzugt 0,1 bis 99,9 Gew.-%, besonders bevorzugt 10 bis 90 Gew.-% und ganz besonders bevorzugt 30 bis 70 Gew.-% bezogen auf die Gesamtmasse des Cycloolefincopolymers, polymerisierte Einheiten, welche sich ableiten von einem oder mehreren acyclischen Olefinen der Formel VII 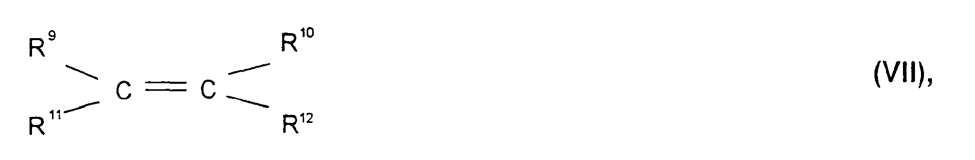 worin R⁹, R¹⁰, R¹¹ und R¹² gleich oder verschieden sind und ein Wasserstoffatom, einen linearen, verzweigten, gesättigten oder ungesättigten C₁-C₂₀₋Kohlenwasserstoffrest wie einen C₁-C₈-Alkylrest oder einen C₆-C₁₈-Arylrest bedeuten.

Außerdem können die erfindungsgemäß verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren monocyclischen Olefinen der Formel VIII 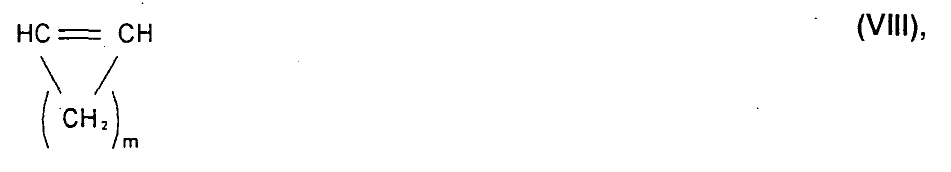 worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind Cycloolefincopolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefincopolymere, die polymerisierte Einheiten enthalten, welche sich ableiten von Olefinen mit Norbornengrundstruktur, bevorzugt Norbornen, Tetracyclododecen, Vinylnorbornen oder Norbornadien, besonders bevorzugt Norbornen oder Tetracyclododecen.

Besonders bevorzugt sind auch Cycloolefincopolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylen- und Tetracyclododecen/ Ethylen-Copolymere.

Bevorzugt einsetzbar sind auch Terpolymere wobei besonders bevorzugt sind Norbornen/Vinylnorbonen/ Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere oder Norbornen/Dicyclopentadien/Ethylen.

Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefinpolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefinpolymers.

Weitere geeignete erfindungsgemäß einzusetzende amorphe Polymere werden in EP-A-317262 beschrieben. Hydrierte Polymere und Copolymere, wie von Styrol oder Dicyclopentadien und anderen amorphen Polyolefinen sind ebenfalls geeignet.

Die erfindungsgemäß verwendeten Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefincopolymere geeignet sind, sind beschrieben in US-A-5,008,356, EP-A-0 407 870, EP-A-0 485 893 und EP-A-0 503 422. Auf diese Referenzen wird hiermit ausdrücklich Bezug genommen.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyi-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
rac-Isopropyliden-bis-(1-indenyl)zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
lsopropylen-(cyclopentadienyl)-(1 -indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid, 4-(η⁵⁻cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethy-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid.
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid;
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]-zirkoniumdichlorid,
[2,2,4Trimethyl-4-(η⁵-(3,4-Di-isopropyl)cyclopentadienyl)-(η⁵-4,5-tetrahydropentalen)]-zirkoniumdichlorid.

Die Herstellung der Cycloolefincopolymere kann auch auf anderen, nachfolgend kurz skizzierten Wegen erfolgen: Katalysatorsysteme basierend auf Mischkatalysatoren aus Titansalzen und Aluminiumorganylen werden in DD-A-109 224 und DD-A-237 070 beschrieben. EP-A-0 156 464 beschreibt die Herstellung mit Katalysatoren auf Vanadiumbasis.

Die Cycloolefincopolymere können auch durch ringöffnende Polymerisation mindestens eines der Monomere mit den Formeln I bis VI und anschließender Hydrierung der erhaltenen Produkte hergestellt werden.

Die Polymerisation kann auch mehrstufig erfolgen, wobei auch Blockcopolymere entstehen können (DE-A-42 05 416).

Cycloolefincopolymere sind bevorzugt amorphe, transparente Werkstoffe. Die Wärmeformbeständigkeiten der Cycloolefincopolymere lassen sich in einem weiten Bereich einstellen. Als Anhaltspunkt für die Wärmeformbeständigkeit, wie sie nach ISO 75 Teil 1 und Teil 2 an Spritzgußformkörpern bestimmt werden kann, läßt sich für Cycloolefincopolymere die Glasübergangstemperatur gemessen nach DIN EN ISO 11357-1 heranziehen. Die beschriebenen Cycloolefincopolymere weisen Glasübergangstemperaturen zwischen -50 und 220 °C auf. Bevorzugt sind Glasübergangstemperaturen zwischen 0 und 180 °C, besonders bevorzugt sind Glasübergangstemperaturen zwischen 40 und 180 °C.

Die mittlere Molmasse der Cycloolefincopolymere läßt sich durch Wasserstoff-Dosierung, Variation der Katalysatorkonzentration oder Variation der Temperatur in bekannter Weise steuern. Die erfindungsgemäß zu verwendenden Cycloolefincopolymere weisen massenmittlere Molmassen Mw zwischen 1.000 und 10.000.000 g/mol auf. Bevorzugt sind massenmittlere Molmassen Mw zwischen 5.000 und 5.000.000 g/mol, besonders bevorzugt sind massenmittlere Molmassen Mw zwischen 5.000 und 1.200.000 g/mol. Diese mit Hilfe der Gelpermeationschromatographie (GPC) in Chloroform bei 35°C mit Hilfe eines Rl Detektors bestimmten Molmassen sind relativ und beziehen sich auf eine Eichung mit engverteilten Polystyrolstandards.

Die hier beschriebenen Cycloolefincopolymere weisen gemäß DIN 53 728 Viskositätszahlen zwischen 5 und 5.000 ml/g auf. Bevorzugt sind Viskositätszahlen zwischen 5 und 2000 ml/g, besonders bevorzugt sind Viskositätszahlen zwischen 5 und 1000 ml/g.

Die optischen Eigenschaften der Polymermischungen wurden an 1 mm dicken Preßplatten mit Hilfe eines Gardner Haze-gard plus gemäß ASTM D 1003 bestimmt.

Das erfindungsgemäße Verfahren zur Herstellung eines bimodalen oder multimodalen Gemisches eines oder mehrerer amorpher Polyolefine unabhängig von der Differenz in der mittleren Molmasse und in der Molmassenverteilung der amorphen Polyolefine kann bevorzugt nach einem oder mehreren der Verfahrensabläufe 1 bis 5 erfolgen.

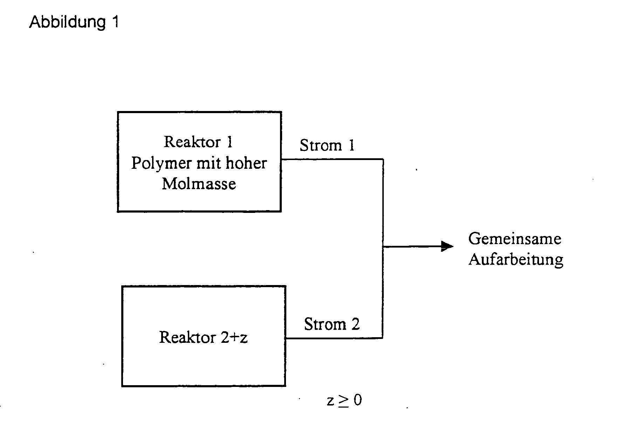

Verfahrensablauf 1 gemäß Abbildung 1 ist eine Parallelschaltung zweier (z = 0) oder mehrerer (z > 0) Reaktoren, wobei in einem Reaktor das amorphe Polyolefin mit hoher Molmasse von VZ >100 ml/g und M_{w} >100000 g/mol durch Lösungspolymerisation hergestellt wird und in dem oder den anderen Reaktoren die anderen Bestandteile der Mischung erzeugt werden, Diese Reaktion muß nicht notwendigerweise in Lösung erfolgen. Anschließend wird die gemeinsame Lösung homogenisiert und das Lösungsmittel abgetrennt.

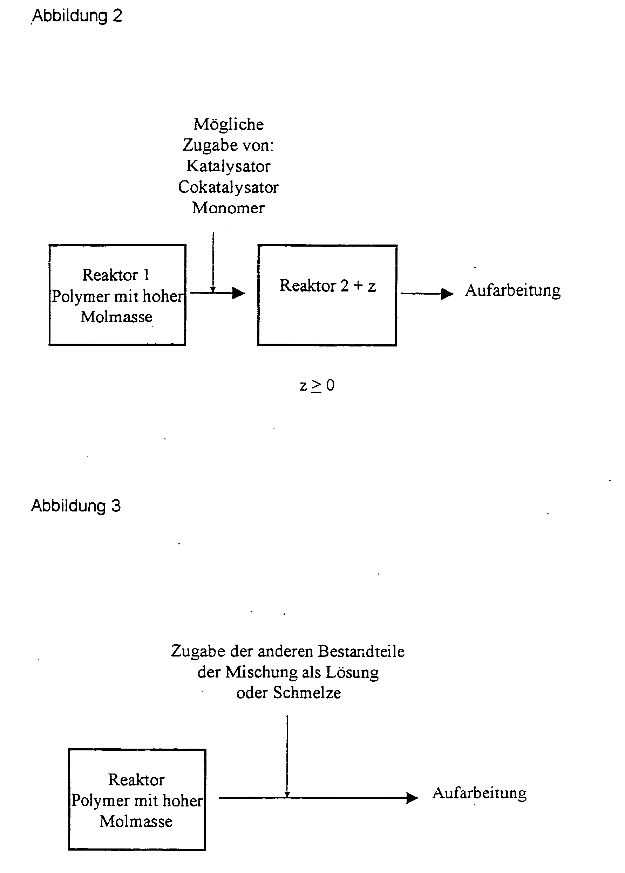

Verfahrensablauf 2 gemäß Abbildung 2 ist eine Reihenschaltung zweier (z = 0) oder mehrerer (z > 0) Reaktoren, wobei im ersten Reaktor das amorphe Polyolefin mit hoher Molmasse von VZ >100 ml/g und M_{w} >100000 g/mol durch Lösungspolymerisation hergestellt wird und in den nachfolgenden Reaktoren die anderen Bestandteile der Mischung erzeugt werden. Vor jedem Reaktor kann jeweils noch Katalysator, Cokatalysator und Monomere individuell zudosiert werden. Anschließend wird die gemeinsame Lösung homogenisiert und das Lösungsmittel abgetrennt.

Verfahrensablauf 3 gemäß Abbildung 3 arbeitet bevorzugt mit einem Reaktor, in dem das amorphe Polyolefin mit hoher Molmasse von VZ >100 ml/g und M_{w} >100000 g/mol durch Lösungspolymerisation hergestellt wird. Die anderen Bestandteile der Mischung werden im Auslauf als Polymerlösung bevorzugt in einem Kohlenwasserstoff oder Kohlenwasserstoffgemisch mit einer Konzentration von 1 bis 100 Gewichtsprozent zudosiert. Im Falle einer Lösung mit 100 Gewichtsprozenten an Polymer liegt eine Polymerschmelze vor. Anschließend wird die gemeinsame Lösung homogenisiert und das Lösungsmittel abgetrennt.

Verfahrensablauf 4 arbeitet bevorzugt mit einem Reaktor, in dem das amorphe Polyolefin mit hoher Molmasse von VZ >100 ml/g und M_{w} >100000 g/mol und die anderen Bestandteile der Mischung durch Einsatz einer Katalysatorkombination gleichzeitig durch Lösungspolymerisation hergestellt werden. Anschließend wird das Lösungsmittel abgetrennt.

Verfahrensablauf 5 arbeitet bevorzugt mit einem Reaktor, in dem das amorphe Polyolefin mit hoher Molmasse von VZ >100 ml/g und M_{w} >100000 g/mol und die anderen Bestandteile der Mischung durch zeitlich periodische Variation der Reglerkonzentration bevorzugt Wasserstoff, Propylen, α-Olefine oder Aluminiumalkyle so nacheinander hergestellt werden, daß über die mittlere Verweilzeit betrachtet eine konstante Molmassenverteilung erhalten wird. Anschließend wird das Lösungsmittel abgetrennt.

Bevorzugt sind die Verfahrensvarianten 1 bis 3.

Allgemein sind die mechanischen und rheologischen Eigenschaften von Polymeren molmassenabhängig. Je größer das Molgewicht ist, desto höher sind Elastizität, Steifheit, Kriecheigenschaften, Viskosität, Schmelzestärke, Spannungsrißbeständigkeit, Chemikalienresistenz usw.

Für viele Anwendungen ist die Verwendung von hochmolekularen, amorphen Polyolefinen mit enger Molmassenverteilung allerdings nicht möglich, da ihre Verarbeitungseigenschaften, hauptsächlich durch die geringe Fließfähigkeit, nur ungenügend sind. Die Verwendung von amorphen Polyolefinen mit breiter Molmassenverteilung bietet nun die Möglichkeit, die guten mechanischen und rheologischen Eigenschaften der höhermolekularen Polyolefine mit der hervorragenden Verarbeitungsfähigkeit von niedermolekularen Polymeren zu kombinieren.

Das erfindungsgemäßen bimodale oder multimodale Gemisch kann besonders zur Herstellung von Filmen mit besserer Spannungsrißbeständigkeit und mit verringertem Gelanteil, optischen Speichermedien (CD, DVD) mit erhöhter Fließfähigkeit und guter Chemikalienresistenz, Flaschen und Behälter mit verbesserter Spannungsrißbeständigkeit und Chemikalienresistenz, Kunststoffartikeln mit besserer Sterilisierbarkeit durch Heißdampf, Gammastrahlen, oder Elektronenstrahlen, Tonerbinder mit besseren Fixierungseigenschaften z.B. breiteres anti-offset-window und höhere Druckgeschwindigkeit, Filmen und Spritzgußartikeln mit höherer Elastizität und Steifigkeit, Überzügen mit erhöhter Spannungrißbeständigkeit und Chemikalienresistenz und Filmen mit verbesserten Barriereeigenschaften verwendet werden.

Die Erfindung wird nun anhand einiger Beispiele näher beschrieben:

### Beispiel 1

Ein Ethylen-Norbornen Copolymer mit der VZ 220 ml/g, der massenmittleren Molmasse von 280000 g/mol und einer Glastemperatur von 70 °C wird kontinuierlich als 6 Gew%ige Lösung in Dekalin gemäß Verfahrensablauf 3 hergestellt. In diese Lösung wird nun kontinuierlich eine 50 Gew%ige Lösung eines anderen Ethylen-Norbornen Copolymeren der VZ 15 ml/g, der massenmittleren Molmasse von 12000 g/mol und der Glastemperatur von 65 °C in Dekalin so zudosiert, daß der Anteil des höhermolekularen Polymeren 8 Gewichtsprozente der gesamten Polymeremasse beträgt. Die Lösung wird gut vermischt und das Lösungsmittel durch bekannte Techniken thermisch entfernt. Eine Preßplatte aus diesem Produkt besitzt eine Transparenz von 93,3 % und einen Haze von 2,5 %. Dies zeigt die hohe Homogenität der Mischung.

### Beispiel 2

Ein Ethylen-Norbornen Copolymer mit der VZ 220 ml/g, der massenmittleren Molmasse von 280000 g/mol und einer Glastemperatur von 70 °C wird kontinuierlich als 6 Gew%ige Lösung in Dekalin gemäß Verfahrensablauf 3 hergestellt. In diese Lösung wird nun kontinuierlich eine Schmelze eines anderen Ethylen-Norbornen Copolymeren der VZ 15 ml/g, der massenmittleren Molmasse von 12000 g/mol und der Glastemperatur von 65 °C in Exxsol so zudosiert, daß der Anteil des höhermolekularen Polymeren 15 Gewichtsprozente der gesamten Polymeremasse beträgt. Die Lösung wird gut vermischt und das Lösungsmittel durch bekannte Techniken thermisch entfernt. Eine Preßplatte aus diesem Produkt zeichnet sich durch eine hohe Transparenz und geringe Lichtstreuung aus, Anzeichen für eine gute Homogenität. Eine Preßplatte aus diesem Produkt besitzt eine Transparenz von 93,0 % und einen Haze von 2,8 %. Dies zeigt die hohe Homogenität der Mischung.

### Beispiel 3

Ein Ethylen-Norbornen Copolymer mit der VZ 130 ml/g, der massenmittleren Molmasse von 120000 g/mol und einer Glastemperatur von 85 °C wird kontinuierlich als 20 Gew%ige Lösung in Dekalin gemaß Verfahrensablauf 3 hergestellt. In diese Lösung wird nun kontinuierlich eine 50 Gew%ige Lösung eines anderen Ethylen-Norbornen Copolymeren der VZ 15 ml/g, der massenmittleren Molmasse von 12000 g/mol und der Glastemperatur von 65 °C in Dekalin so zudosiert, daß der Anteil des höhermolekularen Polymeren 25 Gewichtsprozente der gesamten Polymeremasse beträgt. Die Lösung wird gut vermischt und das Lösungsmittel durch bekannte Techniken thermisch entfernt. Eine Preßplatte aus diesem Produkt besitzt eine Transparenz von 93,5 % und einen Haze von 2,4 %. Dies zeigt die hohe Homogenität der Mischung.

### Beispiel 4

Ein Ethylen-Norbornen Copolymer mit der VZ 130 ml/g, der massenmittleren Molmasse von 120000 g/mol und einer Glastemperatur von 135 °C wird kontinuierlich als 10 Gew%ige Lösung in Dekalin gemäß Verfahrensablauf 3 hergestellt. In diese Lösung wird nun kontinuierlich eine 20 Gew%ige Lösung eines anderen Ethylen-Norbornen Copolymeren der VZ 55 ml/g, der massenmitleren Molmasse von 60000 g/mol und der Glastemperatur von 135 °C in Dekalin so zudosiert, daß der Anteil des höhermolekularen Polymeren 10 Gewichtsprozente der gesamten Polymeremasse beträgt. Die Lösung wird gut vermischt und das Lösungsmittel durch bekannte Techniken thermisch entfernt. Eine Preßplatte aus diesem Produkt besitzt eine Transparenz von 94,0 % und einen Haze von 1,9 %. Dies zeigt die hohe Homogenität der Mischung.

### Beispiel 5

Ein Ethylen-Norbornen Copolymer mit der VZ 220 ml/g, der massenmittleren Molmasse von 280000 g/mol und einer Glastemperatur von 80 °C wird kontinuierlich als 6 Gew%ige Lösung in Dekalin gemäß Verfahrensablauf 3 hergestellt. In diese Lösung wird nun kontinuierlich eine 50 Gew%ige Lösung eines anderen amorphen Polyolefins der Glastemperatur von 65 °C (Handelsname: Escorez 5320) in Dekalin so zudosiert, daß der Anteil des höhermolekularen Polymeren 10 Gewichtsprozente der gesamten Polymeremasse beträgt. Die Lösung wird gut vermischt und das Lösungsmittel durch bekannte Techniken thermisch entfernt. Eine Preßplatte aus diesem Produkt besitzt einen Transparenz von 92,9 %und einen Haze von 3,0 %. Dies zeigt die hohe Homogenität der Mischung.

### Beispiel 6

Ein Ethylen-Norbornen Copolymer mit der VZ 80 ml/g, der massenmittleren Molmasse von 100000 g/mol und einer Glastemperatur von 80 °C wird kontinuierlich als 6 Gew%ige Lösung in Dekalin gemäß Verfahrensblauf 3 hergestellt. In diese Lösung wird nun kontinuierlich eine 50 Gew%ige Lösung eines anderen amorphen Polyolefins der Glastemperatur von 65 °C (Handelsname: Escorez 5320) in Dekalin so zudosiert, daß der Anteil des höhermolekularen Polymeren 25 Gewichtsprozente der gesamten Polymeremasse beträgt. Die Lösung wird gut vermischt und das Lösungsmittel durch bekannte Techniken thermisch entfernt. Eine Preßplatte aus diesem Produkt besitzt einen Transparenz von 93,2 % und einen Haze von 2,8 %. Dies zeigt die hohe Homogenität der Mischung.

### Vergleichsbeispiel 1

Ein Ethylen-Norbornen Copolymer mit der VZ 80 ml/g, der massenmittleren Molmasse von 100000 g/mol und einer Glastemperatur von 75 °C wird in der Schmelze mit Hilfe eins Doppelschneckenextruders des Types Haake TW 100 mit einem anderen Ethylen-Norbornen Copolymeren der VZ 15 ml/g, der massenmittleren Molmasse von 12000 g/mol und der Glastemperatur von 65 °C vermischt, so daß die Endmischung zu 10% aus dem höhermolekularen amorphem Polyolefin besteht.. Der extrudierte Schmelzetrang weist eindeutig nicht aufgeschmolzene, stärker lichtstreuende Tröpfchen auf. Die Transparenz beträgt 89,9 % und der Haze 8,8 %. Dies ist ein Zeichen der schlechten Homogenität der Mischung.

### Vergleichsbeispiel 2

Ein Ethylen-Norbornen Copolymer mit der VZ 80 ml/g, der massenmittleren Molmasse von 100000 g/mol und einer Glastemperatur von 75 °C wird in der Schmelze mit Hilfe eins Doppelschneckenextruders des Types Haake TW 100 mit einem anderen Ethylen-Norbornen Copolymeren der VZ 15 ml/g, der massenmittleren Molmasse von 12000 g/mol und der Glastemperatur von 65 °C vermischt, so daß die Endmischung zu 20% aus dem höhermolekularen amorphem Polyolefin besteht. Die Transparenz beträgt 91,4 % und der Haze 3,8 %. Dies ist ein Zeichen der schlechten Homogenität der Mischung.

### Vergleichsbeispiel 3

Ein Ethylen-Norbornen Copolymer mit der VZ 80 ml/g, der massenmittleren Molmasse von 100000 g/mol und einer Glastemperatur von 75 °C wird in der Schmelze mit Hilfe eins Doppelschneckenextruders des Types Haake TW 100 mit einem anderen Ethylen-Norbornen Copolymeren der VZ 15 ml/g, der massenmittleren Molmasse von 12000 g/mol und der Glastemperatur von 65 °C vermischt, so daß die Endmischung zu 50% aus dem höhermolekularen amorphen Polyolefin besteht. Die Transparenz beträgt 92,8 % und der Haze 3,0 %. Dies ist ein Zeichen der ausreichenden Homogenität der Mischung.

### Vergleichsbeispiel 4

Mit Hilfe eins Doppelschneckenextruders des Types Haake TW 100 wird versucht 85 Gew % eines Ethylen-Norbornen Copolymer mit der VZ 20 ml/g und einer Glastemperatur von 63 °C mit 5 Gew % eines Ethylen-Norbornen Copolymeren der VZ 81 ml/g und der Glastemperatur von 75 °C und 10 Gew % eines Ethylen-Norbornen Copolymeren der VZ 115 ml/g und der Glastemperatur von 75 °C zu vermischen. Der extrudierte Strang weist eindeutig nicht aufgeschmolzene, stärker lichtstreuende Tröpfchen auf. Die Transparenz beträgt 87,3 % und der Haze 9,8 %. Dies ist ein Zeichen der schlechten Homogenität der Mischung.

### Vergleichsbeispiel 5

Mit Hilfe eins Doppelschneckenextruders des Types Haake TW 100 wird versucht 80 Gew % eines Ethylen-Norbornen Copolymer mit der VZ 20 ml/g und einer Glastemperatur von 63 °C mit 5 Gew % eines Ethylen-Norbornen Copolymeren der VZ 81 ml/g und der Glastemperatur von 75 °C und 15 Gew % eines Ethylen-Norbornen Copolymeren der VZ 115 ml/g und der Glastemperatur von 75 °C zu vermischen. Der extrudierte Strang weist eindeutig nicht aufgeschmolzene, stärker lichtstreuende Tröpfchen auf. Die Transparenz beträgt 88,7 % und der Haze 5,8 %. Dies ist ein Zeichen der schlechten Homogenität der Mischung.

### Vergleichsbeispiel 6

Mit Hilfe eins Doppelschneckenextruders des Types Haake TW 100 wird versucht 70 Gew % eines Ethylen-Norbornen Copolymer mit der VZ 20 ml/g und einer Glastemperatur von 63 °C mit 15 Gew % eines Ethylen-Norbornen Copolymeren der VZ 81 ml/g und der Glastemperatur von 75 °C und 15 Gew % eines Ethylen-Norbornen Copolymeren der VZ 115 ml/g und der Glastemperatur von 75 °C zu vermischen. Der extrudierte Strang weist eindeutig nicht aufgeschmolzene, stärker lichtstreuende Tröpfchen auf. Die Transparenz beträgt 90,7 % und der Haze 5,3 %. Dies ist ein Zeichen der schlechten Homogenität der Mischung.

### Vergleichsbeispiel 7

Es wird versucht ein Ethylen-Norbornen Copolymer mit der VZ von 200 ml/g und einer Glastemperatur von 65 °C bei einer Temperatur von 310 °C und einer Scherspannung von 2,7E5 Pa durch eine 1*1 mm Düse zu extrudieren. Der extrudierte Schmelzestrang ist stark braun gefärbt und zeigt eine sehr starke Strukturierung der Oberfläche. Es wird eine Viskosität von 100000 Pas und ein MFI 0.27 cm³/10min bestimmt. Bei 280 °C wird überhaupt kein Strang erhalten. Ein solches Produkt kann demnach nur äußerst schwierig in der Schmelze verarbeitet werden.

Die Unterschiede in den Materialeigenschaften, insbesondere der optischen Eigenschaften zwischen Produkten, hergestellt nach den Beispielen und Vergleichsbeispielen, werden in der nachstehenden Tabelle 1 dargestellt.

**Tabelle 1**

| Beispiel (B) | Transparenz | Haze |
|---|---|---|
| Vergleichsbeispiel (V) | (%) | (%) |
| B1 | 93,3 | 2,5 |
| B2 | 93,0 | 2,8 |
| B3 | 93,5 | 2,4 |
| B4 | 94,0 | 1,9 |
| B5 | 92,9 | 3,0 |
| B6 | 93,2 | 2,8 |
| V1 | 89,9 | 8,8 |
| V2 | 91,4 | 3,8 |
| V3 | 92,8 | 3,0 |
| V4 | 87, 3 | 9,8 |
| V5 | 88,7 | 5,8 |
| V6 | 90,7 | 5,3 |

## Patentansprüche

1. Verfahren zur kontinuierlichen Herstellung eines bimodalen oder multimodalen Gemisches von zwei oder mehreren amorphen Polyolefinen unterschiedlicher Molmasse, die aufgrund ihrer unterschiedlichen Schmelzviskositäten nicht in der Schmelze homogen gemischt werden können, wobei ein amorphes Polyolefin mit hoher Molekularmasse, das eine VZ von > 100 ml/g und eine M_{w} von > 100.000 g/mol aufweist, mit mindestens einem amorphen Polyolefin mit niedriger Molekularmasse in Lösung gebracht und gemischt wird und das Lösungsmittel anschließend entfernt wird,
**dadurch gekennzeichnet, dass**
a) durch Parallelschaltung oder Reihenschaltung zweier oder mehrerer Reaktoren, bei denen in einem Reaktor das amorphe Polyolefin mit hoher Molmasse durch Lösungspolymerisation hergestellt wird und in den anderen Reaktoren die anderen Bestandteile der Mischung erzeugt werden, die Polyolefine in Lösung gemischt werden, oder
b) in einem Reaktor, in dem das amorphe Polyolefin mit hoher Molmasse durch Lösungspolymerisation hergestellt wird und im Auslauf des Reaktors die anderen Bestandteile der Mischung in Form einer Polymerlösung zudosiert werden,
und die gemäß a) oder b) erhaltene Lösung des Polymergemisches homogenisiert und das Lösungsmittel abgetrennt wird.

2. Verfahren nach Anspruch 1, wobei das amorphe Polyolefin mit einer hohen Molekularmasse eine VZ > 120 ml/g und eine M_{w} von > 120 000 g/mol aufweist.

3. Verfahren nach Anspruch 1, wobei das amorphe Polyolefin mit einer hohen Molekularmasse eine VZ > 150 ml/g, eine M_{w} von > 150000 g/mol aufweist.

4. Verfahren nach einem der Ansprüche 1 bis 3, wobei das amorphe Polyolefin ein Cycloolefincopolymer ist.

5. Verfahren nach einem oder mehreren der Ansprüche 1 bis 4, wobei das bimodale oder multimodale Gemisch mindestens ein Cycloolefincopolymer, enthaltend 0,1 bis 100 Gew.-%, bezogen auf die Gesamtmasse des Cycloolefincopolymers, polymerisierte Einheiten, welche sich ableiten von mindestens einem polycyclischen Olefin der Formeln I, II, II', III, IV, V oder VI 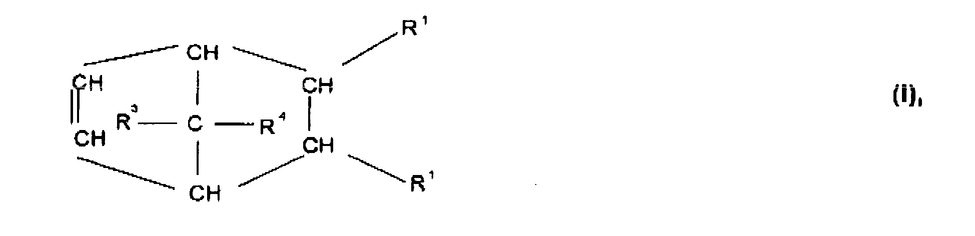 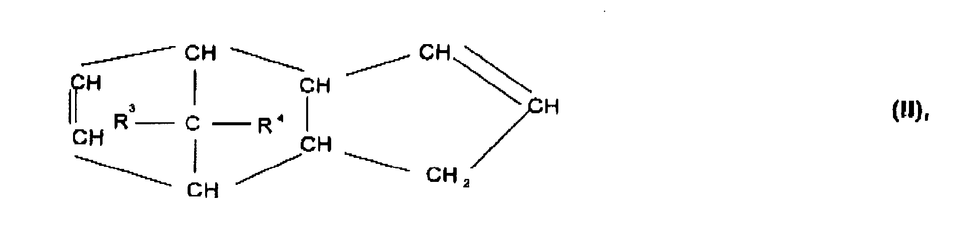 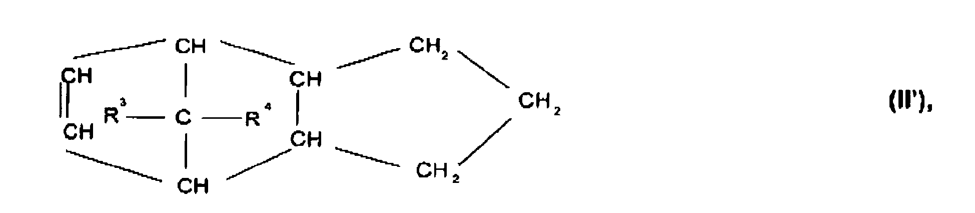 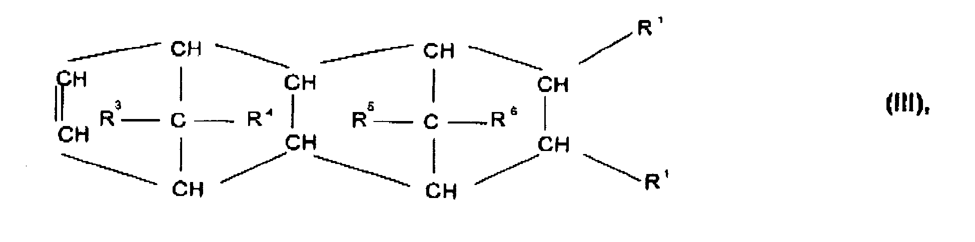 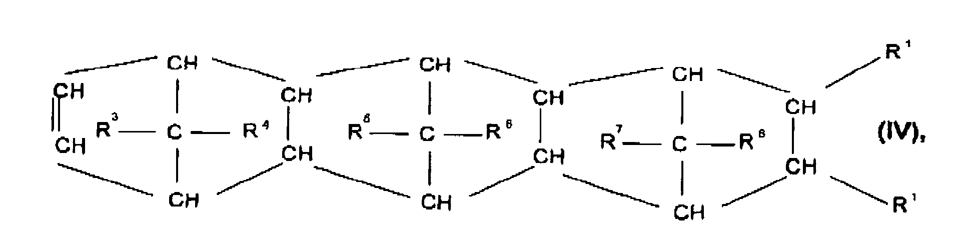 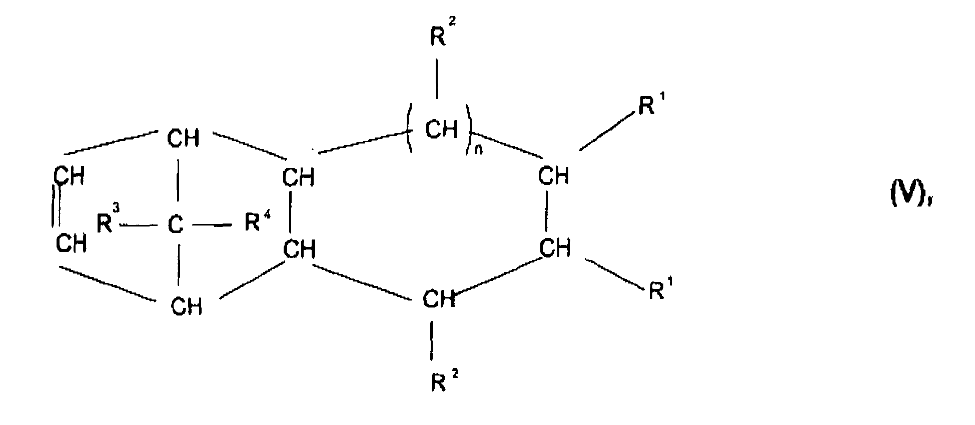 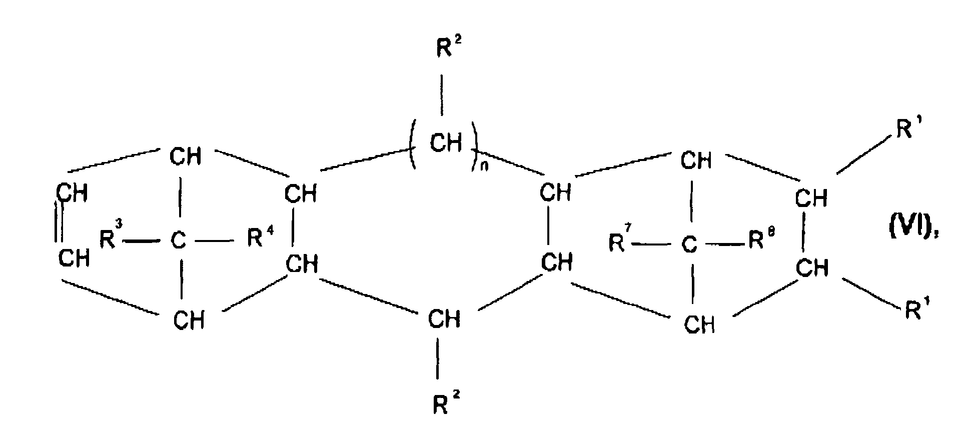 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und gegebenenfalls enthaltend bis zu 99,9 Gew.-%, bezogen auf die Gesamtmasse des Cycloolefincopolymers, polymerisierte Einheiten, welche sich ableiten von einem oder mehreren acyclischen Olefinen der Formel VII 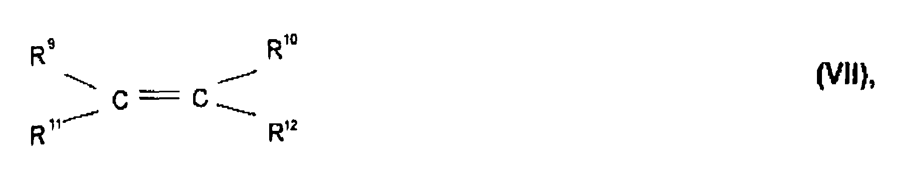 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈₋Arylrest bedeuten, enthält.

6. Verfahren nach einem oder mehreren der Ansprüche 1 bis 5, wobei die Cycloolefincopolymere bis zu 45 Gew.-%, bezogen auf die Gesamtmasse des Cycloolefincopolymers, polymerisierte Einheiten enthalten, welche sich ableiten von einem oder mehreren monocyclischen Olefinen der Formel VIII 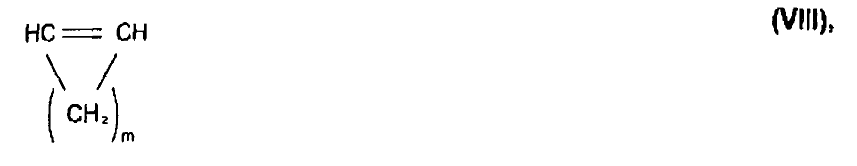 worin m eine Zahl von 2 bis 10 ist.

7. Verfahren nach einem oder mehreren der Ansprüche 1 bis 6, wobei die cyclischen und polycylischen Olefine eine oder mehrere der Gruppen Halogen-, Hydroxyl-, Ester-, Alkoxy-, Carboxy-, Cyano-, Amido-, Imido- oder Silylgruppen aufweisen.

8. Verfahren nach einem oder mehreren der Ansprüche 1 bis 7, wobei die Cycloolefincopolymere polymerisierte Einheiten, welche sich ableiten von polycyclischen Olefinen der Formeln I oder III, und polymerisierte Einheiten, welche sich ableiten von acyclischen Olefinen der Formel VII, enthalten.

9. Verfahren nach einem oder mehreren der Ansprüche 1 bis 8, wobei die Cycloolefincopolymere polymerisierte Einheiten enthalten, welche sich ableiten von Olefinen mit einer Norbornengrundstruktur, bevorzugt von Norbomen, Tetracyclododecen, Vinylnorbornen oder Norbornadien.

10. Verfahren nach einem oder mehreren der Ansprüche 1 bis 9, wobei die Cycloolefincopolymere polymerisierte Einheiten enthalten, welche sich ableiten von acyclischen α-Olefinen mit 2 bis 20 C-Atomen, bevorzugt Ethylen oder Propylen, besonders bevorzugt Ethylen.

## Claims

1. A process for the continuous preparation of a bimodal or multimodal mixture of two or more amorphous polyolefins having a different molar mass which, on account of their different melt viscosities, cannot be mixed homogeneously in the melt, in which a high molar mass amorphous polyolefin having a VN of >100 ml/g and an M_{w} of >100 000 g/mol is brought into solution and mixed with at least one amorphous polyolefin having a low molar mass and the solvent is subsequently removed,
**characterized in that**
a) the amorphous polyolefin having a high molar mass is prepared by solution polymerization in one reactor of an assembly of two or more reactors connected in parallel or in series and the other constituents of the mixture are produced in the other reactors after which the polyolefins are mixed in solution, or
b) the amorphous polyolefin having a high molar mass is prepared by solution polymerization in one reactor and the other constituents of the mixture are introduced in the form of a polymer solution into the solution flowing from the reactor,
and the solution of polymer mixture obtained according to a) or b) is homogenized and the solvent is separated off.

2. The process as claimed in claim 1, wherein the amorphous polyolefin having a high molar mass has a VN of > 120 ml/g and an M_{w} of > 120,000 g/mol.

3. The process as claimed in claim 1, wherein the amorphous polyolefin having a high molar mass has a VN of > 150 ml/g and an M_{w} of > 150,000 g/mol.

4. The process as claimed in any of claims 1 to 3, wherein the amorphous polyolefin is a cycloolefin copolymer.

5. The process as claimed in one or more of claims 1 to 4, wherein the bimodal or multimodal mixture comprises at least one cycloolefin copolymer comprising from 0.1 to 100% by weight, based on the total mass of the cycloolefin copolymer, of polymerized units derived from at least one polycyclic olefin of the formula I, II, II', III, IV, V or VI. 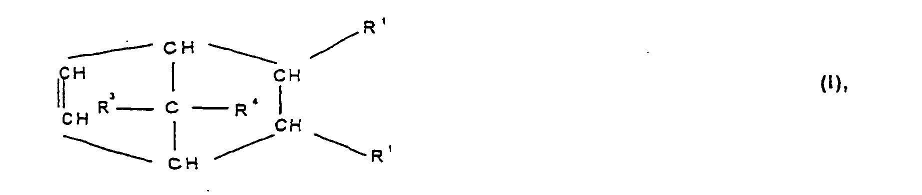 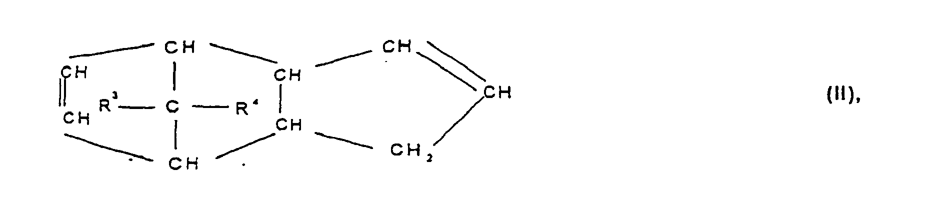 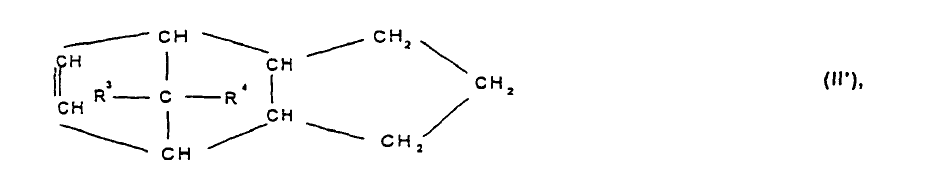 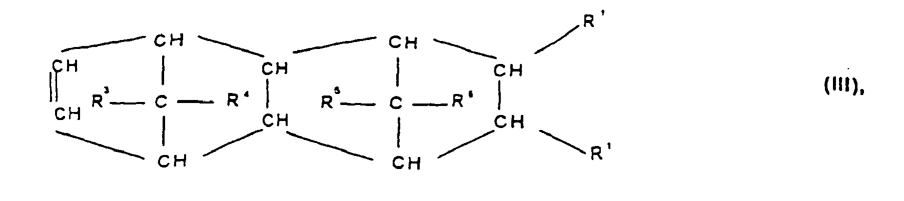 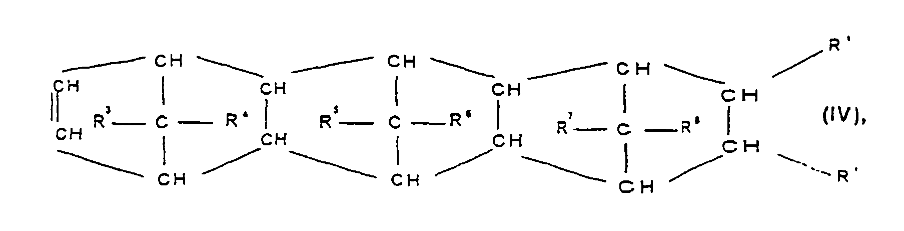 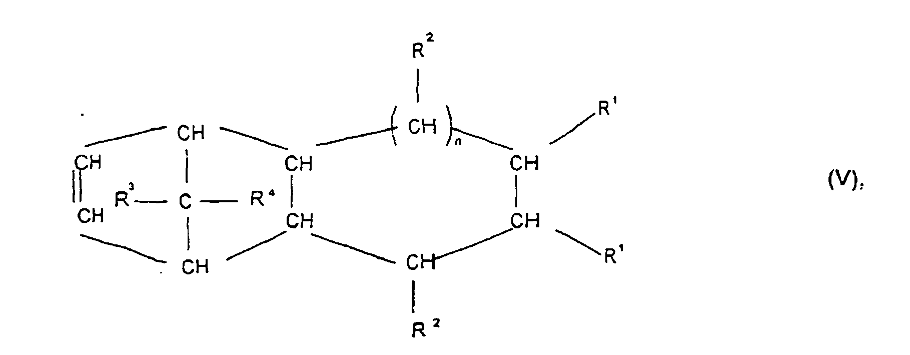 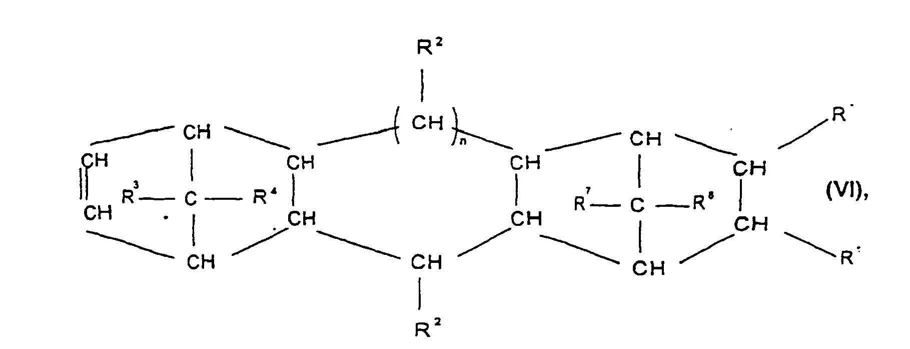 where R¹, R², R³, R⁴, R⁵, R⁶, R⁷ and R⁸ are identical or different and are each a hydrogen atom or a C₁-C₂₀₋hydrocarbon radical such as a linear or branched C₁-C₈₋alkyl radical, a C₆-C₁₈-aryl radical, a C₇-C₂₀₋alkylenearyl radical or a cyclic or acyclic C₂-C₂₀₋alkenyl radical or form a saturated, unsaturated or aromatic ring, where identical radicals R¹ to R⁸ in the various formulae I to VI can have different meanings, and n can be from 0 to 5, and, if desired, up to 99.9% by weight, based on the total mass of the cycloolefin copolymer, of polymerized units derived from one or more acyclic olefins of the formula VII 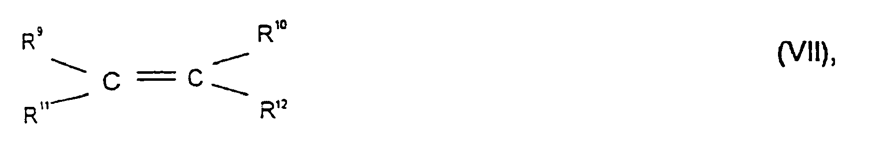 where R⁹, R¹⁰, R¹¹ and R¹² are identical or different and are each a hydrogen atom, a linear, branched, saturated or unsaturated C₁-C₂₀-hydrocarbon radical such as a C₁₋C₈-alkyl radical or a C₆-C₁₈-aryl radical.

6. The process as claimed in one or more of claims 1 to 5, wherein the cycloolefin copolymers further comprise up to 45% by weight, based on the total mass of the cycloolefin copolymer, of polymerized units derived from one or more monocyclic olefins of the formula VIII 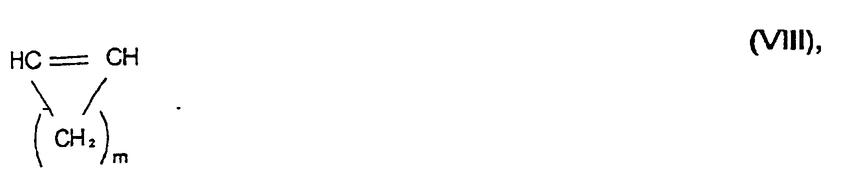 where m is from 2 to 10.

7. The process as claimed in one or more of claims 1 to 6, wherein the cyclic and polycyclic olefins contain one or more of the groups halogen, hydroxyl, ester, alkoxy, carboxy, cyano, amido, imido and silyl.

8. The process as claimed in one or more of claims 1 to 7, wherein the cycloolefin copolymers comprise polymerized units derived from polycyclic olefins of the formula I or III and polymerized units derived from acyclic olefins of the formula VII.

9. The process as claimed in one or more of claims 1 to 8, wherein the cycloolefin copolymers comprise polymerized units derived from olefins having a norbornene skeleton, preferably from norbornene, tetracyclododecene, vinylnorbornene or norbornadiene.

10. The process as claimed in one or more of claims 1 to 9, wherein the cycloolefin copolymers comprise polymerized units derived from acyclic α-olefins having from 2 to 20 carbon atoms, preferably ethylene or propylene, particularly preferably ethylene.

## Revendications

1. Procédé de préparation en continu d'un mélange bimodal ou multimodal de deux polyoléfines amorphes ou plus de masse moléculaire différente qui, en raison de leurs viscosités à l'état fondu différentes, ne peuvent pas. être mélangées de manière homogène dans la masse fondue, dans lequel on met en solution et on mélange une polyoléfine amorphe de masse moléculaire élevée, qui présente un indice de viscosité VZ supérieur à 100 mL/g et une masse moléculaire M_{w} supérieure à 100 000 g/mol, avec au moins une polyoléfine amorphe de faible masse moléculaire, puis on élimine le solvant,
**caractérisé en ce que**
a) les polyoléfines sont mélangées en solution dans deux réacteurs ou plus montés en parallèle ou en série, dans lesquels la polyoléfine amorphe de masse moléculaire élevée est préparée par polymérisation en solution dans un réacteur et les autres composants du mélange sont préparés dans les autres réacteurs, ou
b) dans un réacteur, dans lequel la polyoléfine amorphe de masse moléculaire élevée est préparée par polymérisation en solution et, à la sortie du réacteur, les autres composants du mélange sont ajoutés sous la forme d'une solution de polymère,
et la solution du mélange de polymères obtenue selon a) ou b) est homogénéisée et le solvant est éliminé.

2. Procédé selon la revendication 1, dans lequel la polyoléfine amorphe de masse moléculaire élevée présente un VZ supérieur à 120 mL/g et une M_{w} supérieure à 120 000 g/mol.

3. Procédé selon la revendication 1, dans lequel la polyoléfine amorphe de masse moléculaire élevée présente un VZ supérieur à 150 mL/g et une M_{w} supérieure à 150 000 g/mol.

4. Procédé selon l'une quelconque des revendications 1 à 3, dans lequel la polyoléfine amorphe est un copolymère de cyclooléfines.

5. Procédé selon l'une quelconque ou plusieurs des revendications 1 à 4, dans lequel le mélange bimodal ou multimodal contient au moins un copolymère de cyclooléfines contenant 0,1% à 100% en poids, par rapport à la masse totale du copolymère de cyclooléfines, de motifs polymérisés qui sont dérivés d'au moins une oléfine polycyclique de formule I, II, II', III, IV, V ou VI 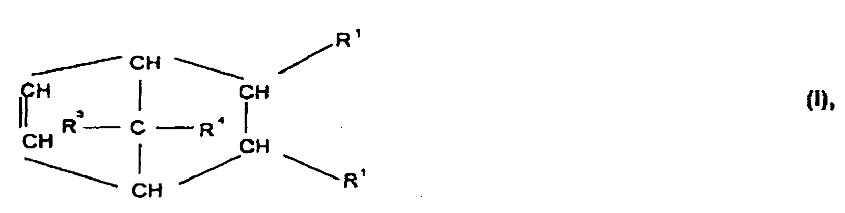 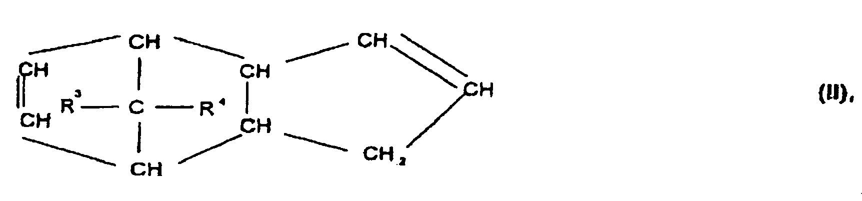 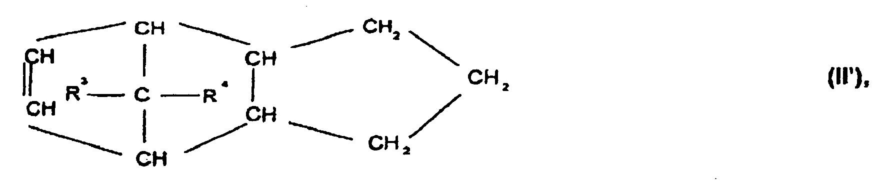 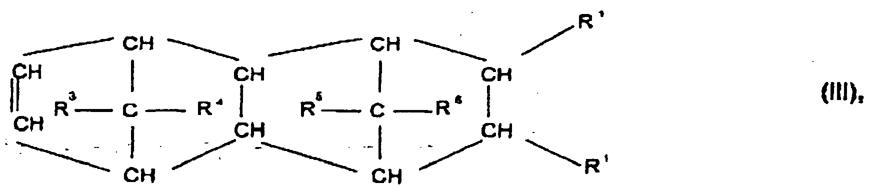 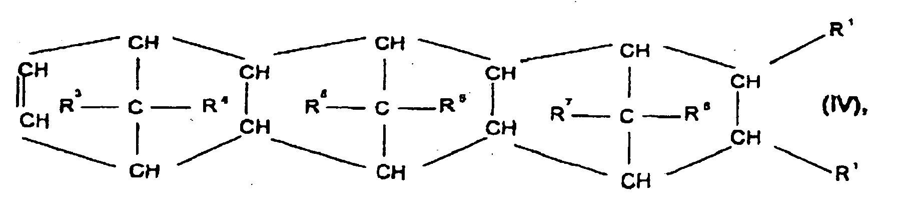 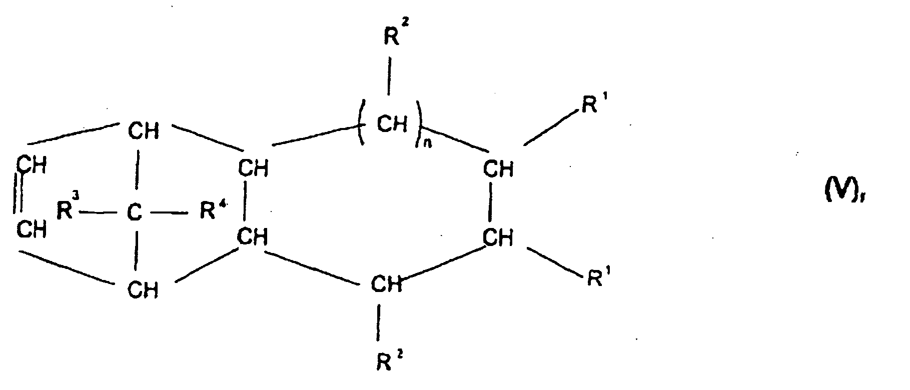 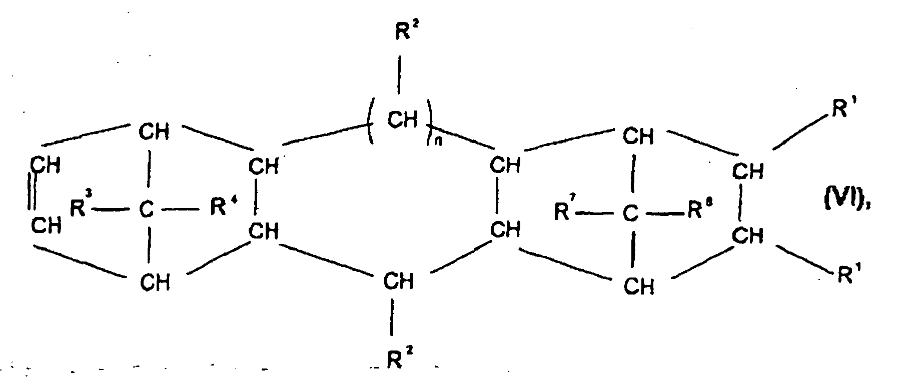 dans lesquelles R¹, R², R³, R⁴, R⁵, R⁶, R⁷ et R⁸ sont identiques ou différents et représentent un atome d'hydrogène ou un groupe hydrocarboné en C₁ à C₂₀ tel qu'un groupe alkyle en C₁ à C₈ linéaire ou ramifié, aryle en C₆ à C₁₈, alkylène-aryle en C₇ à C₂₀, alkylène en C₂ à C₂₀ cyclique ou acyclique, ou un cycle saturé, insaturé ou aromatique, dans lesquelles des même groupes R¹ à R⁸ dans les différentes formules I à VI peuvent avoir une signification différente, où n peut valoir de 0 à 5, et contenant éventuellement jusqu'à 99,9% en poids, par rapport à la masse totale du copolymère de cyclooléfines, de motifs polymérisés qui sont dérivés d'une ou plusieurs oléfines acycliques de formule VII 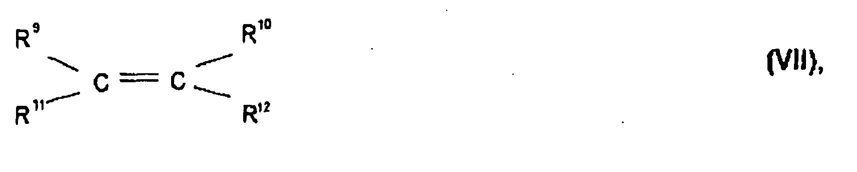 dans laquelle R⁹, R¹⁰, R¹¹ et R¹² sont identiques ou différents et représentent un atome d'hydrogène, un groupe hydrocarboné en C₁ à C₂₀ linéaire, ramifié, saturé ou insaturé tel qu'un groupe alkyle en C₁ à C₈ ou aryle en C₆ à C₁₈.

6. Procédé selon l'une quelconque ou plusieurs des revendications 1 à 5, dans lequel les copolymères de cyclooléfines contiennent, par rapport à la masse totale du copolymère de cyclooléfine, jusqu'à 45% en poids de motifs polymérisés qui sont dérivés d'une ou plusieurs oléfines monocycliques de formule VIII 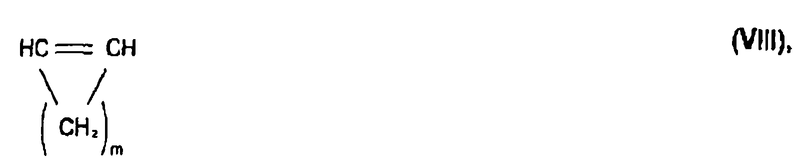 dans laquelle m est un nombre de 2 à 10.

7. Procédé selon l'une quelconque ou plusieurs des revendications 1 à 6, dans lequel les oléfines cycliques et polycycliques présentent un ou plusieurs des groupes halogéno, hydroxyle, ester, alcoxyle, carboxyle, cyano, amido, imido ou silyle.

8. Procédé selon l'une quelconque ou plusieurs des revendications 1 à 7, dans lequel les copolymères de cyclooléfines contiennent des motifs polymérisés qui sont dérivés d'oléfines polycycliques de formule I ou III, et des motifs polymérisés qui sont dérivés d'oléfines acycliques de formule VII.

9. Procédé selon l'une quelconque ou plusieurs des revendications 1 à 8, dans lequel les copolymères de cyclooléfines contiennent des motifs polymérisés qui sont dérivés d'oléfines ayant une structure de base norbornène, de préférence norbornène, tétracyclododécène, vinylnorbornène ou norbornadiène.

10. Procédé selon l'une quelconque ou plusieurs des revendications 1 à 9, dans lequel les copolymères de cyclooléfines contiennent des motifs polymérisés qui sont dérivés d'α-oléfines acycliques contenant 2 à 20 atomes de carbone, de préférence de l'éthylène ou du propylène, de manière plus particulièrement préférée de l'éthylène.
